(19) Europäisches Patentamt
European Patent Office
Office européen des brevets

(11) **EP 2 410 446 A1**

(12) **EUROPEAN PATENT APPLICATION**

(43) Date of publication:
**25.01.2012 Bulletin 2012/04**

(51) Int Cl.:
***G06F 17/30*** *(2006.01)*

(21) Application number: **11177778.5**

(22) Date of filing: **20.10.2007**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.10.2006 US 862385 P**

(62) Document number(s) of the earlier application(s) in accordance with Art. 76 EPC:
**07844478.3 / 2 080 118**

(71) Applicant: **Colwood Technology, LLC
Peterborough, NH 03458 (US)**

(72) Inventor: **Donaldson, Justin
Bloomington, IN Indiana 47406 (US)**

(74) Representative: **Barton, Russell Glen
Withers & Rogers LLP
4 More London Riverside
London
SE1 2AU (GB)**

Remarks:
This application was filed on 17-08-2011 as a divisional application to the application mentioned under INID code 62.

(54) **Personal music recommendation mapping**

(57) Scale free network datasets, such as music tracks, playlists and other media item recommendations are analyzed and presented in a graphic map display (FIG. 1) for visualization, preferably in an interactive environment (FIG. 2). A plotting and visualization system generally comprises a network extraction routine, coupled with a high performance eigen decomposition (map layout calculation) algorithm, and a novel visualization interaction methodology.

FIG. 2

EP 2 410 446 A1

**Description**

Related Applications

This application claims priority from U.S. Provisional Application No. 60/862,385 filed 10/20/2006 and incorporated herein by this reference.

Technical Field

This invention pertains to methods and apparatus in the field of analysis, plotting and visualization systems for scale free network datasets for example playlist-based music data.

Background of the Invention

With the explosion of digital music and digital video, consumers are faced with more and more options of media that they can purchase and/or access. Consumers are finding themselves overwhelmed with the masses of options of digital media from which they can pick.

As the cost of digital storage continues to drop, online vendors of media, particularly music, are finding that the incremental cost of increasing the number of digital media in their inventory is rapidly dropping. Thus online vendors are offering more and more content - expanding both the diversity of the content, but also the age and quantity of historical releases available. Combine this with the truly global nature of the internet, and the end result is a completely bewildering array of media that is immediately available for purchase and playing.

New systems and methods are evolving to enable consumers to obtain recommendations for media content, for example music, that the user probably will like. Recommender systems are known, for example, that consider meta-data that describes music already selected by a user, and then select other media items that have similar meta-data. The use of meta-data or descriptor-driven queries to search a music database are disclosed, for example, in Baum et al. patent application publication US-2005/0060350 A1. Recommender systems such as those described in Baum et al. are relatively crude.

More sophisticated systems can generate a related set of media items (e.g., songs) when given a "query set" of related media items, such as a user's playlist. The system creates a new set of media items by merging existing sets of media items selected from a large database, where each of those sets contains items related to each other, and each of those sets (again, playlists) shares some similarity with the items in the query set. See commonly-assigned US 2006-0173910.

Regardless of the specific type of recommender systems involved, users still need a meaningful way to sift through numerous recommendations, and get some intuitive sense of how those recommended items relate to the user's own set(s) of selected items such as playlist.

Which recommendations are "better" or "closer" to the user's tastes? Although individual tastes or preferences in the selection of music and other media items (music videos, films, books, articles, etc.) admittedly are somewhat subjective, it would be helpful to users to provide a visualization environment to aide in perusing the recommendations they receive.

Summary of the Invention

In the case of playlist-based music data, the numbers of items in a dataset to be taken into account can be quite large. More specifically, the large magnitudes of information encountered in such scale free network datasets makes them difficult to analyze, plot, and visualize. Sacrifices often must be made on the plot's representational veracity, or representational completeness. The present application is directed to improved methodologies, typically implemented in software, for analyzing and graphically displaying such information in a meaningful way, given reasonable time and computational limitations.

One aspect of the present invention is the application of query based subgraphs of a larger network using a method based on multidimensional scaling. Since the basis for the network data is a query, certain characteristics of node connections can be compared across the sub-graph and the original network, and the node weight data can be represented as a function of its negative entropy. According to this scheme, a small sub graph of a larger network structure is analyzed. A z-score weighting scheme is used to modify each node's connection strengths in the neighborhood against its total number of connections in the original network, and the dimensionality of these weighted connections strengths is reduced to create a low dimensional embedding suitable for visualization and analysis.

Additional aspects and advantages of this invention will be apparent from the following detailed description of preferred embodiments, which proceeds with reference to the accompanying drawings.

Brief Description of the Drawing

Fig. 1 is a first example of a visualization map of a dataset.

Fig. 2 illustrates user interaction with the map display of FIG. 1.

Fig. 3 is an example of a ZMDS plot of a queried subgraph.

FIG. 4 is a conceptual illustration of a set of "node interaction zones" for an interactive map display.

Detailed Description of Preferred Embodiments

LaPlacian matrices are a known basis for representing network data as a matrix. Several techniques, including LaPlacian eigenmaps and spectral decomposition involve solving for low dimensional embeddings of network structure. Usually, geodesic distance is used to encode connection weights, requiring that the matrix formatted network be positive semi-definite, or in network terms, symmetric.

Eigendecomposition methods produce a consistent representational form across any number of trials and orderings of data. This makes them ideal for machine learning and indexing techniques, such as the PageRank calculation used by Google. However, the computation time and resources needed for large datasets of hundreds of thousands of nodes make this process intractable with conventional personal computing power.

In many cases, "querying" the network by extracting a significant collection of nodes and connections is a useful method of understanding more about local network structure. One such technique, called the "snowball" sampling method, involves selecting a collection of nodes and then expanding this selection with nodes with which they share a direct link. This method allows for an understanding of the original collection of nodes in the context of the connections they share with the larger network. However, scale free network characteristics of a graph will cause certain "hub" nodes to be included in query results at a much higher rate. In this context, hub nodes can constitute entropy, or non-salience in the plot representation. Even though they may share an above average number of connections in the queried neighborhood, their extra-neighborhood connections are significantly higher than their local neighborhood connections.

**Structural Entropy**

The contrast between the neighborhood and the original network characteristics forms the basis for entropy in the structure of the network. Node weights are usually different between the two networks, and the magnitude of this difference is an indication of the entropy of that particular node in that particular neighborhood. Collections of nodes with negative entropy form network "structures" that are considered to have high negative entropy as well. The weights of connections between nodes indicate the strength of the connection according to one or more characteristics. Below we apply these ideas to a practical visualization system.

In the following description, certain specific details of programming, software modules, user selections, network transactions, database queries, database structures, etc., are provided for a thorough understanding of the embodiments of the invention. However, those skilled in the art will recognize that the invention can be practiced without one or more of the specific details, or with other methods, components, materials, etc.

In some cases, well-known structures, materials, or operations are not shown or described in detail in order to avoid obscuring aspects of the invention. Furthermore, the described features, structures, or characteristics may be combined in any suitable manner in one or more embodiments. In general, the methodologies of the present invention are advantageously carried out using one or more digital processors. In one preferred embodiment, a server provides database and computational facilities to remote users via a network such as the Internet. Various display devices suitable for displaying maps of the types described herein are well known and therefore detailed discussion of such displays is omitted.

Playlist-based music data that exhibits scale free network characteristics will be used to illustrate aspects of the invention. According to this data, nodes represent individual tracks (or songs), and the corresponding weights are the number of times these songs occur on a playlist.

A neighborhood of a large database was constructed from a list of songs performed by several artists, for example Jennifer Lopez, Bruce Springsteen, Tori Amos, Good Charlotte, and Oasis. Using the weighting scheme outlined above, the weights can be modified by simply dividing by the total number of global connections the node has, analogous to TF-IDF. The TF-IDF weight (term frequency-inverse document frequency) is a weight often used in information retrieval and text mining. This weight is a statistical measure used to evaluate how important a word is to a document in a collection or corpus. The importance increases proportionally to the number of times a word appears in the document but is offset by the frequency of the word in the corpus. Variations of the TF-IDF weighting scheme are often used by search engines as a central tool in scoring and ranking a document's relevance given a user query.

However, we have found that this weighting function removes most of the variance from a node's edge weight distribution as well. A weighing scheme that preserves the variance (with a standard deviation unit form) is preferred instead.

To achieve this characteristic, a modification to the original LaPlacian matrix definition (L=D - A) is needed. First we used a weighted adjacent matrix taken from the retrieved neighborhood for matrix A. Next, we create the diagonal matrix D from the sum of the total connection weights for each node in the neighborhood. Then, rather than subtracting the two matrices, they are added. Finally, a weighing scheme is applied on each node:

$$w_{i,j} = \frac{k_{i,j} - \bar{k}}{\sigma}$$

with $w_{i,j}$ being the node weight between nodes $i$ and $j$, $k_{i,j}$ being the co-occurrence counts between the nodes, and $\sigma$ being the standard deviation for $k$. Applying this method for every $k$ will make the LaPlacian matrix asymmetrical. However, this can be reconciled by applying a row or a column wise Euclidean distance calculation across the matrix. The Euclidean distance matrix can be reduced to suitable dimensions using multidimensional scaling, and the resulting plot can be visualized, which produces an interesting and informative manifold as further explained below.

Three-dimensional Manifolds

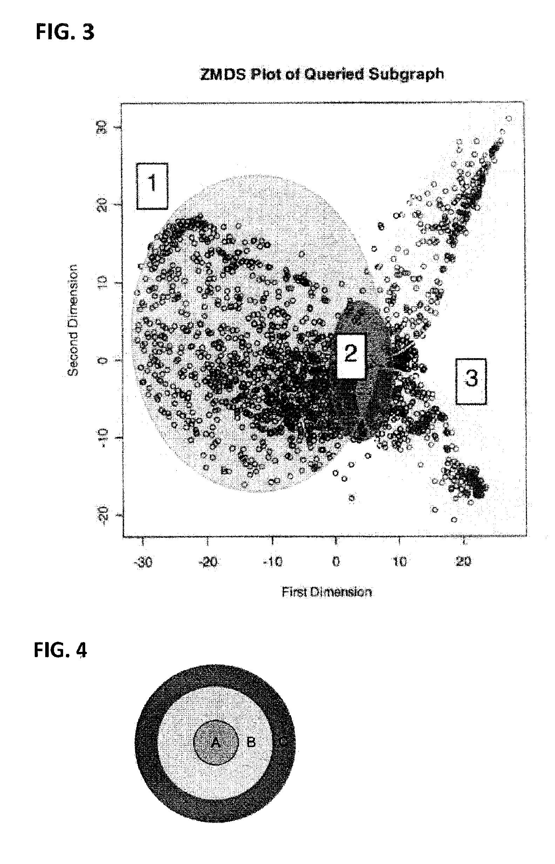

Three dimensional manifolds generated by this method often exhibit three noticeable components; a "Fan", a "Zero Space", and one or more "Tails". Referring now to FIG. 3, particularly noteworthy among these components are the Tails (feature labeled 3 in FIG. 3). Tails are evidence of high negative entropy in the structure of the neighborhood in question. They consist of clusters of nodes that form connections with themselves far more often than with other parts of the neighborhood in the context of the neighborhood. Since these connections are measured in terms of frequency, there is often a gradient of participation with the cluster. The nodes closest to the base of the Tail are like bridges from these tightly knit clusters to the rest of the neighborhood, while the nodes on the end of the tail only associate strongly with the clusters itself.

In the plot in FIG. 3, the Tails correspond to songs by Bruce Springsteen and Tori Amos, and the example representation shows that these two artists have songs that form connections with themselves far more often than with the rest of the neighborhood. The Tails also indicate which songs serve as "bridges" to the rest of the neighborhood (in this case, it was "Born in the USA" for Bruce and "Strange" for Tori). The base of the Tail usually attaches itself to a Zero Space (feature 2 of FIG. 3), where the entropy of the node structure passes zero. These nodes contain edge and identity weights close to zero as a result of the weighting function. This means that they are often hub nodes that form connections with many of the nodes in the neighborhood, while participating very little with nodes outside of the neighborhood. These nodes connect the high entropy Tails to the larger "Fan" structure (see feature 1 of FIG. 3).

The Fan is a two-dimensional representation of nodes that have more extra-neighborhood connections than intra-neighborhood connections, or that have smaller degrees and form the majority of their connections to nodes in the Fan. Thus these types of representations of network data provide for meaningful visualization and user interaction, as further described below.

Implementation Methodologies

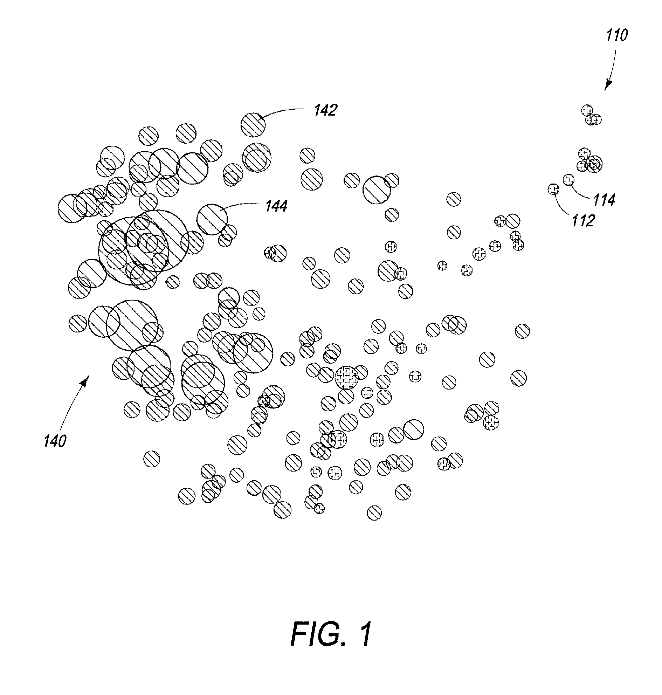

Next we describe practical systems and methods for generating graphical visualizations or "maps" of a network dataset, such as the example map display shown in FIG. 1. The methodology in general begins with network extraction and analysis.

Network Extraction and Analysis

In one embodiment, a network extraction routine can be programmed as a script, for example a Perl script, preferably utilizing a matrix data language for high performance matrix calculations. The script can be deployed on a suitable server to provide visualization services to remote users over a network as further explained herein. It can also be employed locally on any suitable digital computer. Specific implementation and programming details are omitted as they will be within the ken of persons skilled in the art in view of the present disclosure. The general routine proceeds as follows.

A. The script is initiated and is passed an integer playlist id as a parameter. In other words, the routine receives a user playlist an as input, or an id to access the user's playlist. For example, in one case, a remote user might download his playlist to a server where the visualization service is mad available. In an alternative embodiment, the user has one or more playlists stored on a server, and he need only log in to the service, and it can access the selected playlist.

B. The script software looks up the playlist associated with the playlist id, and downloads the corresponding xml playlist track information. For example, in one embodiment the script uses iTunes® xml formatted playlists. Other markup languages, formats and protocols can be used to acquire playlist data.

C. The xml playlist is parsed, and the track ids for the corresponding tracks are gathered.

D. The script accesses a recommender database or service, and reads in a selected number, for example the first 200, recommendations for each track id. Recommendation weighting data is included.

E. Recommendation occurrences are calculated. If a recommendation does not share at least a predetermined minimum number of occurrences within the neighborhood, for example two, it is removed. This is one way of reducing the dataset to manageable proportion for visualization. The *neighborhood* as that term is used in this application and in the claims is a special term of art. In the context of a scale free network dataset, a small sub graph of the larger network structure is termed a *neighborhood.* A "scale free network" indicates that aspects of the network's structure and dynamics will stay the same no matter how large it gets. Thus, for example, a database of user playlists (for example, the users or "members" of a music related web site) can grow quite large.

F. Next, the total tracks are sorted by popularity, and only a predetermined number of the overall most popular recommendation tracks are returned, for example 200 recommendation tracks, along with the original playlist tracks. This number is not critical; the idea again is to reduce the size of the set for display. For small screen devices, such a PDA's and even smaller set might be used.

G. A matrix is constructed from the pair-wise recommendation strengths between any two tracks. The strength metrics are provided by the recommender that provided the recommended tracks. The diagonal of the matrix is that track's overall popularity as given in the respective PCA file.

H. Next, a row-wise Euclidean distance across the matrix is calculated, and the old matrix may be deleted to save space.

I. Then, in one preferred embodiment, but optionally, the natural log of each matrix element may be calculated and substituted for the original element value. The natural log "compresses" the distances of the tracks such that "close" distances are better preserved than "far" distances. This has positive aspects for the map display described below, since representing "long" distances on the map tends to skew the resulting plot, limiting its descriptive ability.

J. A metric MDS (multi-dimensional scaling) method is used on the matrix to reveal the top eigenvectors (dimensions) of the matrix.

In one embodiment, the script looks up the track ID for each recommended item in an available database. In that case, it can return the corresponding track name, artist name, album name, etc. Preferably, the track id, it's relevant title, artist, album information, and it's two dimensional position from the MDS algorithm are returned as an XML file. (Other protocols or coding can be used.)

At a minimum, just the two dimensional position from the MDS algorithm is sufficient to create a graphical map display (two-dimensional). Each item, for example a song, is plotted at the corresponding two dimensional position on the map. Each song may be represented on the map by a dot, circle, square or any other visible indicator or token just to show where it lies in the 2-D map space. The x,y axes or dimensions of the map display do not have any straightforward definition. (For example, the x dimension does NOT represent the tempo of a song; neither does the y direction correlate to any meta-data or descriptor of the song.) Rather, the utility arises from the location of song tokens relative to other song tokens on the map.

Referring now to **FIG. 1**, it shows a map of a set of songs each represented by a corresponding round dot. Two sub-sets or species of items in this map are identified by different colors, indicated by hatching in the drawing. In a practical implementation, the use of a color display is preferred. Any number of sub-sets can be displayed concurrently in principle. Again, the use of different colors would be preferred to identify the different groups. However, different sizes or shapes of icons could be used as well.

In the map of **FIG. 1**, a first set of dots indicated generally at **110** correspond to an input set, for example a user's playlist. Each dot of this first set, corresponding to a song or other playlist media item, is identified by the diagonal hatching, for example dots **112, 114.** The more populous, second set of dots, indicated generally at **140**, correspond to songs (or other media items) that are recommended to the user based on their relationships to the items on the user's playlist. These are indicated by small circles or unfilled dots, for example dots **142, 144**. In a general way, the user can observe that some of the recommended dots are more proximate to the user's playlist songs (even overlapping in the map space) than some of the visually more "distant" recommendations.

In another aspect of the invention, a graphic map display of the type described above can be programmed to be interactive to more easily convey additional information to a user. User interaction may involve, for example, inputs from a user with a pointing device (mouse, joystick, touchpad, etc.) or other input device. Mainly, a means for moving a cursor on the map display screen is a threshold requirement. This enables the user to move the cursor or "hover" over a selected one of the items (dots, tokens) on the map to request more information.

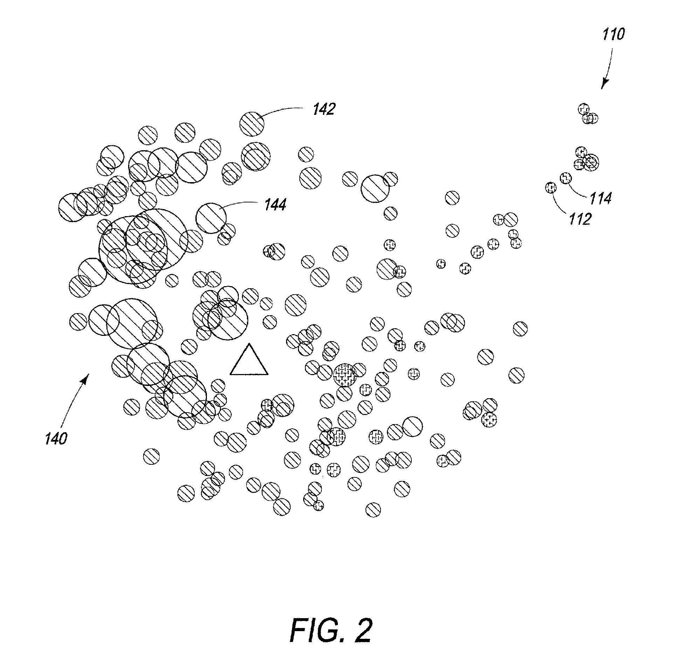

Referring now to FIG. 2, when a user hovers over an item, or "clicks" on it, additional information can be displayed, such as meta-data that describes the selected item. The meta-data might include, for example, the song title, artist, album, genre, year of release, etc. The meta-data might be displayed adjacent to the selected item on the map, or at any convenient location on the display screen.

In accordance with another feature of the invention, an interactive display dynamically repositions selected items on the map. This feature is especially useful where the map is crowded with numerous tokens located in close proximity or overlapping one another, as in some areas of the map of FIG. 1. (This condition can be termed "nuisance occlusion.") Preferably, one item is selected at a time, which remains stationary, and the surrounding items (those within a predetermined distance of the selected item) are moved away from it ("repulsed") so as to open up a space or "halo" around the selected item. This feature is illustrated in FIG. 2. The item of interest to the user may be selected, for example, by cursor hovering or mouse click or the like. The size of the "halo" is not critical; it mainly facilitates selection of one item at a time. Exactly how the surrounding items move away is not critical either. For example, they might just move toward a distant corner, corresponding to the quadrant in which they a located relative to an imaginary Cartesian axes having its origin at the location of the selected item. In an alternative embodiment, the nearby items around a selected item may just "disappear" temporarily from the map, again so that they do not obscure the selected item. This enables the user to more easily click on or otherwise select an individual item of interest to learn more about it.

In one preferred embodiment, an interactive visualization environment generally as described above is implemented as an embedded flash applet. Other technologies can be used as well. The applet will read the input data, described above, preferably in an XML file. It will then generate nodes at the locations described in the xml file, scaled to fit the size of the applet display panel. In one preferred embodiment, it will size the nodes to fit their popularity score. The popularity score is relative to the other nodes in the neighborhood, and normalized. This is so that all nodes fit into a nice range for visualization and interaction as discussed above.

In another embodiment, map nodes will be repulsed according to the position of the mouse cursor. This interaction style also is designed to alleviate the excessive "nuisance occlusion" that can occur with data distributions such as the one generated by the mapping algorithm. In one presently preferred embodiment, each node has several possible states and behaviors depending on its relationship with the cursor. Referring now to **FIG. 4:**

> 1. Node is "Hovered" (cursor is hovering over it, represented by area "A")
>
>> a. The node will increase it's color saturation, making it more noticeable. It will stop all movement.
>
> 2. Node is "Covered" (cursor is over it, but the node is occluded by another node on top of it. The topmost node in this arrangement is hovered, the rest are covered)
>
>> a. The node will move directly away from the cursor.
>
> 3. Node is "Short Ranged" (cursor is within a short distance of the node, represented by the area "B")
>
>> a. The node will move directly away from the cursor.
>
> 4. Node is "Mid Ranged Bordered" (the cursor is in a small gap between the short range and the mid range distance zone. Between zones B and C)
>
>> a. The node will stop moving. This is done so as to "spread" the nodes away from the cursor, while still allowing close nodes to be selected.
>
> 5. Node is "Mid Ranged" (the cursor is within the range C)
>
>> a. Node will move directly away from the cursor.
>
> 6. Node is "Far Ranged Bordered" (The cursor is in a small gap between the far range, and outside of the far range).
>
>> a. Node will stop moving.
>
> 7. Node is "Far Ranged" (the cursor is outside of C)

> a. Node will move back to its original location. If it's already there, it will do nothing.

In other alternative embodiments, additional movement logic enhancements can be applied. For example, the system keeps track of how many nodes are moving at any point in time. If only one or two nodes are interacting with the cursor, it will not move nearly as much (or at all). This is to simplify interaction over "sparse" areas of node density. Also, nodes preferably have a certain "elastic" factor applied to them, preventing them from being moved too far from their original location.

The analysis and visualization methods disclosed herein preferably are implemented in software. The results, in one aspect, are the graphical maps generated for display on a user's display screen (associated with a computer or the like). Preferably, such software is implemented on a centralized server, for example using scripts as described above, so that it can be used by remote users via a network. (Here we refer to a *communication network* such as the Internet, as distinguished from a more conceptual network of data.)

Some aspects of embodiments of the invention are defined in the following enumerated example embodiments (EEEs):

> EEE 1: A method for analysis and visualization mapping of music data comprising the steps of:
>
>> (a) receiving a playlist comprising track ids for the corresponding tracks;
>> (b) accessing a recommender database or service, and retrieving a predetermined number of recommended track ids responsive to the playlist track ids, each recommended track id including respective strength metrics, the playlist ids and the recommended ids together forming a dataset;
>> (c) removing recommendation track ids that do not share at least a predetermined minimum number of occurrences within the dataset neighborhood, so as to reduce the dataset to a manageable proportion for visualization display;
>> (d) sorting the recommended track ids by popularity;
>> (e) retaining only a predetermined number of the overall most popular recommendation tracks to reduce the size of the dataset for visualization display;
>> (f) constructing a matrix from the pair-wise recommendation strengths between each pair of tracks in the reduced dataset, wherein the diagonal of the matrix is that track's overall popularity as indicated in a selected resource;
>> (g) calculating a row-wise Euclidean distance across the matrix;
>> (h) applying a metric MDS (multi-dimensional scaling) method to the matrix to determine the predominate eigenvectors (dimensions) of the matrix;

(i) based on the predominate eigenvectors, determining a 2-dimensional map position for each of the playlist tracks and the recommended tracks; and

(j) plotting a visualization map of the reduced dataset on a graphic display screen in accordance with the 2-dimensional map position for each track.

EEE 2: A method according to EEE 1 and further comprising:

calculating a natural log of each matrix element and substituting the natural log in place of the original value or each matrix element so as to compress relative distances on the plotted visualization map.

EEE 3: A method according to EEE 1 and further comprising:

in the plotted visualization map, displaying corresponding meta-data for a track selected by a user.

EEE 4: A method according to EEE 2 including representing the playlist tracks and the recommended tracks by different first and second symbols, respectively, on the visualization map display.

EEE 5: A method according to EEE 4 wherein the first and second symbols are distinguished by different colors on the visualization map display.

EEE 6: A method according to EEE 2 wherein the relative popularity of each music track is indicated by a corresponding size of the associated symbol on the map display.

EEE 7: A method according to EEE 4 wherein the plotting step includes implementing a user interactive feature that enables a user to select a symbol on the map so to display meta-data associated with the corresponding music track.

EEE 8: A method according to EEE 4 wherein the plotting step includes implementing a user interactive feature that dynamically repositions non-selected symbols on the map by repulsing adjacent symbols away from a current cursor location so as to alleviate occlusion in a crowded region of the map.

EEE 9: A method according to EEE 8 including increasing a color saturation of a selected symbol on the map display to support user interaction with the map.

EEE 10: A method for analysis and mapping of a network dataset comprising the steps of:

(a) accessing a stored digital network dataset in which nodes correspond to individual media items, the weights of connections between network nodes indicate the strength of the connection according to at least one predetermined characteristic;

(b) retrieving a selected neighborhood subset of the network dataset so as to form a neighborhood matrix;

(c) applying a weighting function to neighborhood matrix, the weighting function selected so as to preserve the variance of each node's edge weight distribution;

(d) applying a selected Euclidean distance calculation across the matrix so as to make the matrix symmetric; and

(e) plotting the resulting matrix data on a graphics display screen apparatus so as to form a 2-dimensional visualization map of the selected neighborhood subset of the network dataset.

EEE 11: A method according to EEE 10 wherein the selected weighting function comprises the steps of:

(a) selecting a weighted adjacency matrix taken from the retrieved neighborhood for matrix A;

(b) creating a diagonal matrix D from a sum of the total connection weights for each node in the neighborhood;

(c) adding the matrices A+D to form a sum matrix; and

(d) applying a weighting function on each node of the sum matrix, the weighting function defined as by the formula

$$w_{i.j} = \frac{k_{i.j} - \overline{k}}{\sigma}$$

with $W_{i.j}$ being the node weight between nodes i and j, $k_{i.j}$ being the co-occurrence counts between the nodes, and $\sigma$ being the standard deviation for k.

EEE 12: A method according to EEE 10 or 11 wherein the network dataset comprises playlist-based music data in which the nodes correspond to individual music tracks or songs and the connection weights represent a number of times that the corresponding songs occur on a playlist.

EEE 13: A method according to EEE 10 or 11 and further comprising the steps of:

(a) retrieving a second selected neighborhood subset of the network dataset so as to form a second neighborhood matrix;

(b) applying the said weighting function to the second neighborhood matrix;

(c) applying the selected Euclidean distance calculation across the second neighborhood matrix; and

(d) plotting the first and second resulting matrix data together on a graphics display screen apparatus so as to form a 2-dimensional visualization map for visual comparison of the first and second neighborhood data.

EEE 14: A method according to EEE 13 wherein the network dataset comprises playlist-based music data in which the nodes correspond to individual media items and the connection weights represent a number of times that the corresponding media items occur on a playlist.

EEE 15: A method according to EEE 14 wherein the first neighborhood corresponds to a user playlist and the second neighborhood corresponds to a recommended playlist created in response to the user playlist.

EEE 16: A method according to EEE 15 including representing the first and second neighborhood items by different first and second symbols, respectively, on the visualization map display.

EEE 17: A method according to EEE 16 wherein the first and second symbols are distinguished by different colors on the visualization map display.

EEE 18: A method according to EEE 16 wherein the first and second symbols are distinguished by different shapes on the visualization map display.

EEE 19: A method according to any of EEEs 10-18 wherein the relative popularity of each item is indicated by a corresponding size of the associated token on the map.

EEE 20: A method according to any of EEEs 10-19 wherein the media items are individual music tracks or songs.

It will be obvious to those having skill in the art that many changes may be made to the details of the above-described embodiments without departing from the underlying principles of the invention. The scope of the present invention should, therefore, be determined only by the following claims.

**Claims**

1.  A method for analysis and visualization mapping of music data comprising the steps of:

    (a) receiving a playlist comprising track ids for the corresponding tracks;

    (b) accessing a recommender database or service, and retrieving a predetermined number of recommended track ids responsive to the playlist track ids, each recommended track id including respective strength metrics, the playlist ids and the recommended ids together forming a dataset;

    (c) removing recommendation track ids that do not share at least a predetermined minimum number of occurrences within the dataset, so as to reduce the dataset to a manageable proportion for visualization display;

    (d) sorting the recommended track ids by popularity;

    (e) retaining only a predetermined number of the overall most popular recommendation tracks to reduce the size of the dataset for visualization display;

    (f) constructing a matrix from the pair-wise recommendation strengths between each pair of tracks in the reduced dataset, wherein the diagonal of the matrix is that track's overall popularity as indicated in a selected resource;

    (g) calculating a row-wise Euclidean distance across the matrix;

    (h) applying a metric MDS (multi-dimensional scaling) method to the matrix to determine the predominate eigenvectors (dimensions) of the matrix;

    (i) based on the predominate eigenvectors, determining a 2-dimensional map position for each of the playlist tracks and the recommended tracks; and

    (j) plotting a visualization map of the reduced dataset on a graphic display screen in accordance with the 2-dimensional map position for each track.

2.  A method according to claim 1 and further comprising:

    calculating a natural log of each matrix element and substituting the natural log in place of the original value or each matrix element so as to compress relative distances on the plotted visualization map.

3.  A method according to claim 1 and further comprising:

    in the plotted visualization map, displaying corresponding meta-data for a track selected by a user.

4. A method according to claim 2 including representing the playlist tracks and the recommended tracks by different first and second symbols, respectively, on the visualization map display, and preferably wherein the relative popularity of each music track is indicated by a corresponding size of the associated symbol on the map display.

5. A method according to claim 4
wherein the first and second symbols are distinguished by different colors on the visualization map display,
and/or
wherein the plotting step includes implementing a user interactive feature that enables a user to select a symbol on the map so to display meta-data associated with the corresponding music track.

6. A method according to claim 4 wherein the plotting step includes implementing a user interactive feature that dynamically repositions non-selected symbols on the map by repulsing adjacent symbols away from a current cursor location so as to alleviate occlusion in a crowded region of the map, preferably further including increasing a color saturation of a selected symbol on the map display to support user interaction with the map.

7. A computer medium comprising computer readable instructions which when executed on a computer system cause the system to perform a method for analysis and mapping of a network dataset comprising the steps of:

(a) accessing a stored digital network dataset in which nodes correspond to individual media items, the weights of connections between network nodes indicate the strength of the connection according to at least one predetermined characteristic;
(b) retrieving a selected neighborhood subset of the network dataset so as to form a neighborhood matrix;
(c) applying a weighting function to neighborhood matrix, the weighting function selected so as to preserve the variance of each node's edge weight distribution;
(d) applying a selected Euclidean distance calculation across the matrix so as to make the matrix symmetric; and
(e) plotting the resulting matrix data on the graphics display screen apparatus so as to form a 2-dimensional visualization map of the selected neighborhood subset of the network dataset.

8. A computer medium according to claim 7 wherein the selected weighting function comprises:

(a) selecting a weighted adjacency matrix taken from the retrieved neighborhood for matrix A;
(b) creating a diagonal matrix D from a sum of the total connection weights for each node in the neighborhood;
(c) adding the matrices A+D to form a sum matrix; and
(d) applying a weighting function on each node of the sum matrix, the weighting function defined as by the formula

$$w_{i,j} \;=\; \frac{k_{i,j} - \overline{k}}{\sigma}$$

with $w_{i,j}$ being the node weight between nodes i and j, $k_{i,j}$ being the co-occurrence counts between the nodes, and σ being the standard deviation for k.

9. A computer medium according to claim 7 or 8 wherein the network dataset comprises playlist-based music data in which the nodes correspond to individual music tracks or songs and the connection weights represent a number of times that the corresponding songs occur on a playlist.

10. A computer medium according to claim 7 or 8 and further comprising:

(a) retrieving a second selected neighborhood subset of the network dataset so as to form a second neighborhood matrix;
(b) applying the said weighting function to the second neighborhood matrix;
(c) applying the selected Euclidean distance calculation across the second neighborhood matrix; and
(d) plotting the first and second resulting matrix data together on a graphics display screen apparatus so as to form a 2-dimensional visualization map for visual comparison of the first and second neighborhood data.

11. A computer medium according to claim 10 wherein the network dataset comprises playlist-based music data in which the nodes correspond to individual media items and the connection weights represent a number of times that the corresponding media items occur on a playlist.

12. A computer medium according to claim 11 wherein the first neighborhood corresponds to a user playlist

**EP 2 410 446 A1**

and the second neighborhood corresponds to a recommended playlist created in response to the user playlist.

13. A computer medium according to claim 12 including representing the first and second neighborhood items by different first and second symbols, respectively, on the visualization map display.

14. A computer medium according to claim 13 wherein the first and second symbols are distinguished by different colors and/or by different shapes on the visualization map display.

15. A computer medium according to any of claims 7-14 wherein the relative popularity of each item is indicated by a corresponding size of the associated token on the map, and/or
wherein the media items are individual music tracks or songs.

FIG. 1

FIG. 2

## FIG. 3

ZMDS Plot of Queried Subgraph

## FIG. 4

Europäisches
Patentamt

European
Patent Office

Office européen
des brevets

**EUROPEAN SEARCH REPORT**

Application Number

EP 11 17 7778

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 02/075591 A (THOMSON LICENSING SA [FR]; CHEVALLIER LOUIS [FR]; SHAO JIANG [FR]; VIG) 26 September 2002 (2002-09-26) * figure 2 * * page 6, line 16 - page 15, line 27 * ----- | 1-15 | INV. G06F17/30 |
| A,D | US 2006/173910 A1 (MCLAUGHLIN MATTHEW R [US]) 3 August 2006 (2006-08-03) * the whole document * ----- | 1-15 | |
| A,D | US 2005/060350 A1 (BAUM ZACHARIAH JOURNEY [US] ET AL) 17 March 2005 (2005-03-17) * the whole document * ----- | 1-15 | |

TECHNICAL FIELDS
SEARCHED      (IPC)

G06F

The present search report has been drawn up for all claims

| Place of search | Date of completion of the search | Examiner |
|---|---|---|
| Munich | 16 December 2011 | Konak, Eyüp |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 11 17 7778

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2011

| Patent document cited in search report | | Publication date | Patent family member(s) | | Publication date |
|---|---|---|---|---|---|
| WO 02075591 | A | 26-09-2002 | CN | 1531695 A | 22-09-2004 |
| | | | EP | 1368756 A1 | 10-12-2003 |
| | | | FR | 2822261 A1 | 20-09-2002 |
| | | | JP | 4451598 B2 | 14-04-2010 |
| | | | JP | 2004525458 A | 19-08-2004 |
| | | | MX | PA03008289 A | 11-12-2003 |
| | | | US | 2004139064 A1 | 15-07-2004 |
| | | | WO | 02075591 A1 | 26-09-2002 |
| US 2006173910 | A1 | 03-08-2006 | US | 2006173910 A1 | 03-08-2006 |
| | | | US | 2010198818 A1 | 05-08-2010 |
| US 2005060350 | A1 | 17-03-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 86238506 P
- US 20050060350 A1, Baum
- US 20060173910 A